Europäisches Patentamt

European Patent Office

Office européen des brevets

(11) Veröffentlichungsnummer: **0 195 249 B1**

# EUROPÄISCHE PATENTSCHRIFT

(45) Veröffentlichungstag der Patentschrift: **02.09.92**

(51) Int. Cl.⁵: **B60L 3/10**, B60T 8/00

(21) Anmeldenummer: **86101947.9**

(22) Anmeldetag: **15.02.86**

(54) Verfahren zur Feststellung von Schleuder- und/oder Gleit-Zuständen bei Fahrzeugen.

(30) Priorität: **09.03.85 DE 3508447**

(43) Veröffentlichungstag der Anmeldung:
**24.09.86 Patentblatt 86/39**

(45) Bekanntmachung des Hinweises auf die
Patenterteilung:
**02.09.92 Patentblatt 92/36**

(84) Benannte Vertragsstaaten:
**AT DE FR GB IT SE**

(56) Entgegenhaltungen:
DE-A- 2 006 349
DE-B- 2 447 577
US-A- 4 075 538

ELEKTRISCHE BAHNEN vol. 82, no. 2, 1984,
DE, Seite 56-65; F. KOECK: "DAS KONZEPT
DER LEITTECHNIK FÜR DIE EL.LOKOMOTIVE
BAUREIHE 120 DER DB"

PATENT ABSTRACTS OF JAPAN vol. 7, no.
197 (M-239) 1342, 27 August 1983, & JP-A-58
095903 (HITACHI SEISAKUSHO K.K.)

(73) Patentinhaber: **Asea Brown Boveri Aktiengesellschaft
Kallstadter Strasse 1
W-6800 Mannheim-Käfertal(DE)**

(72) Erfinder: **Hildenbrand, Peter, Dr.
August Bebelstrasse 110
W-6800 Mannheim 1(DE)**

(74) Vertreter: **Rupprecht, Klaus, Dipl.-Ing. et al
c/o Asea Brown Boveri Aktiengesellschaft
Zentralbereich Patente Postfach 100351
W-6800 Mannheim 1(DE)**

**Beschreibung**

Die Erfindung bezieht sich auf ein Verfahren zur Feststellung von Schleuder- und/oder Gleit-Zuständen bei Fahrzeugen nach dem Oberbegriff des Anspruchs 1. Solche Verfahren werden insbesondere bei Schienenfahrzeugen angewendet, können aber auch bei Straßenfahrzeugen Anwendung finden.

Der Kraftschluß zwischen Rad und Schiene bzw. Rad und Straße oder sonstigem Untergrund ist eine physikalische Größe, die ortsabhangigen, zeitabhängigen und witterungsbedingten Einflüssen unterworfen ist. Um im Fahr- und Bremsbetrieb eine hohe Ausnutzung des jeweils gegebenen Kraftschlusses zu erreichen, ist eine Regelung der Antriebs- und Bremseinrichtungen erforderlich. Mit einer solchen Regelung wird ein Fahr- oder Bremsbetrieb in einem Betriebsbereich ermöglicht, der nahe an der Grenze zum Schleudern oder Gleiten eines angetriebenen oder gebremsten Rades liegt. Ist die Antriebsleistung höher als bei gegebenem Kraftschluß auf den Untergrund, z.B. auf die Schiene, übertragen werden kann, so haftet das angetriebene Rad nicht mehr ausreichend, sondern dreht schließlich mit hoher Drehzahl, wobei das Rad auf dem Untergrund rutscht und die Zugkraft des Fahrzeugs stark vermindert ist. Dieser Vorgang wird mit "Schleudern" bezeichnet. Gleiten tritt bei zu hoher Bremsleistung ein, wobei das Rad sich zu langsam dreht oder sich nicht dreht und somit auf dem Untergrund ebenfalls rutscht. Gleiten und Schleudern werden gemeinsam auch mit "Schlüpfen" bezeichnet.

Für die Regelung der Antriebs- und Bremseinrichtungen ist eine Einrichtung erforderlich, die Schleuder- oder Gleitzustande erkennt und meldet. Zur Erkennung solcher Schleuder- oder Gleitzustände sind eine Reihe von Verfahren und Einrichtungen bekannt.

Aus der DE-PS 24 47 577 ist z.B. eine Schaltung zur Verhinderung des Schlüpfens von Achsen von mehrmotorigen elektrischen Triebfahrzeugen bekannt, wobei ein Schlüpfen durch Vergleich des Spannungsabfalls an den Ankern der Motoren festgestellt wird. Diese Schaltung ist jedoch nur für in Reihe geschaltete Motoren geeignet.

In "Elektrische Bahnen" Heft 2, 1984, Seite 56 bis 65, insbesondere Seite 62 und 63 sind ebenfalls Schleuderschutzeinrichtungen einer Lokomotive beschrieben. Dabei ist außer einer Radbeschleunigungsüberwachung, die lediglich starke Radbeschleunigungsänderungen erkennen kann, ein Vergleich der sich aufgrund der Drehzahl des Rades errechenbaren Fahrzeuggeschwindigkeit mit der tatsächlichen Fahrzeuggeschwindigkeit vorgesehen. Bei Fahrzeugen ohne Laufachse (nichtangetriebene Achse) ist jedoch eine kostengünstige und exakte Ermittlung der tatsächlichen Fahrzeuggeschwindigkeit schwierig. Sie kann z.B. aus verschiedenen auf der Lokomotive vorhandenen Informationen als fiktive Fahrzeuggeschwindigkeit errechnet werden. Diese Berechnung ist aufwendig und bei besonderen Betriebszustanden mit größeren Fehlern behaftet. Aufwendig und fehlerhaft sind auch optische Aufnehmer und Radarverfahren zur Ermittlung der tatsächlichen Fahrzeuggeschwindigkeit. Sie sind außerdem wartungsaufwendig und versagen bei extremer Witterung und bei Kurvenfahrten. In AET (38)-1983, Seite 45 bis 56 wird eine sogenannte Schlupfregelung als Möglichkeit zur Hochausnutzung des Rad/Schienen-Kraftschlusses vorgeschlagen. Dabei wird allerdings übersehen, daß es von den äußeren Umständen abhängt, bei welchem Schlupf jeweils das maximale Moment übertragen werden kann. Außerdem wird auch für die Schlupfregelung die Fahrzeug-Istgeschwindigkeit benötigt.

Der Erfindung liegt deshalb die Aufgabe zugrunde, ein Verfahren zur Feststellung von Schleuder- und/oder Gleitzuständen bei elektrisch angetriebenen Fahrzeugen anzugeben, das unabhängig von einer Ermittlung der tatsächlichen Fahrzeuggeschwindigkeit arbeitet und trotzdem ein Fahren nahe an der Schleudergrenze ermöglicht.

Diese Aufgabe wird durch ein Verfahren nach dem Anspruch 1 gelöst. Vorteilhafte Ausgestaltungen sind in den Unteransprüchen angegeben.

Vorteile des erfindungsgemäßen Verfahrens bestehen u.a. darin, daß weder eine Einrichtung zur Messung der Geschwindigkeit, noch der Beschleunigung des Fahrzeugs benötigt wird. Es genügt eine deutlich weniger aufwendige Einrichtung zur Messung der Drehbeschleunigung der Motorwelle oder des Antriebsrades. Das Verfahren erlaubt ein frühzeitiges Erkennen der Schleudergrenze, ein Fahren an der Schleudergrenze und ein sicheres Erkennen aller möglicher Schleuder- oder Gleitvorgänge. Der Hard- und Software-Aufwand ist vergleichsweise gering.

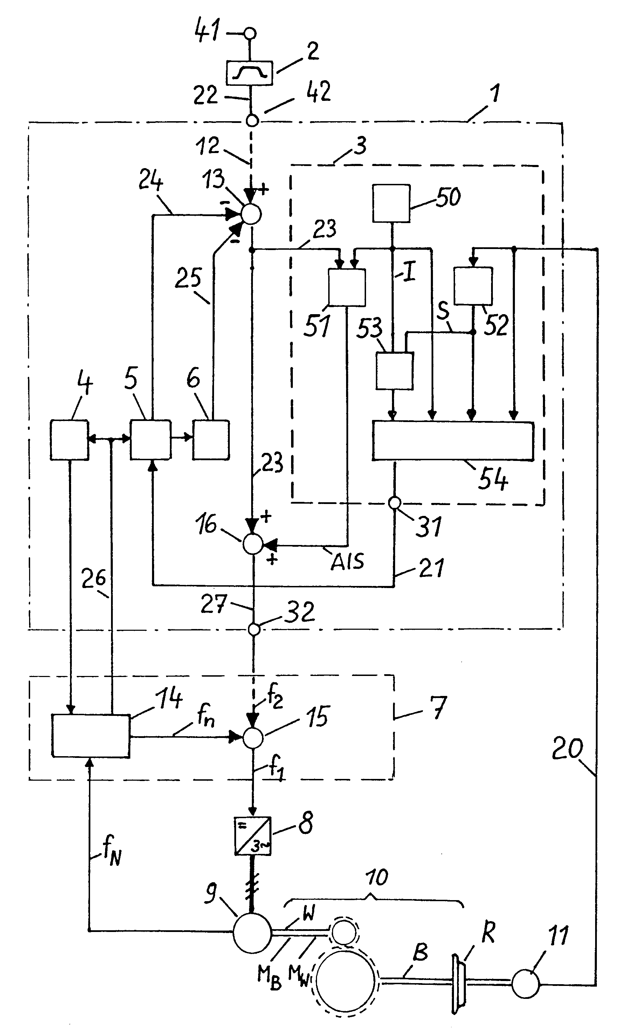

Weitere Vorteile und eine genauere Beschreibung sind dem nachstehenden Ausführungsbeispiel zu entnehmen, das anhand der Zeichnung erläutert wird.

In der Zeichnung sind Teile einer Einrichtung zur Fahrzeugsteuerung und -regelung in einem Blockschema dargestellt, so weit sie zur Erläuterung der Erfindung erforderlich sind. Es handelt sich hierbei um den Antrieb einer Drehstromlokomotive. Die Erfindung läßt sich jedoch auch für Gleichstromantriebe und Antriebe von Straßenfahrzeugen anwenden.

Die Zeichnung zeigt eine Steuereinrichtung 1, die für den gesamten Antrieb oder für einen Teil des Antriebs, z.B. für ein Drehgestell oder eine Achse der Lokomotive vorgesehen sein kann. Die

Steuereinrichtung 1 enthält mehrere Funktionsgruppen 3 bis 6, nämlich eine Schleuderidentifikationseinrichtung 3, eine Beschleunigungsgrenzwertvorgabe 4, eine Schleuderschutzerfassung 5 und eine Momentensollwertbeeinflussung 6. Eine Fahr/Bremssteuerung 2 ist der Steuereinrichtung 1 vorgeschaltet und eine Wechselrichterregelung 7 ist der Steuereinrichtung 1 nachgeschaltet.

Die Wechselrichtersteuerung 7 steuert einen Wechselrichter 8, der einen Motor 9 speist. Die Gleichstromzuführung zum Wechselrichter 8 ist nicht dargestellt. Der Motor 9 wirkt auf ein mechanisches Antriebssystem 10, wozu Hohlwelle, Übersetzungsräder und Antriebsräder zählen. Am mechanischen Antriebssystem 10 ist ein Tachogenerator 11 angeordnet, z.B. an der Hohlwelle oder an einem Antriebsrad. Der Ort der Anordnung des Tachogenerators 11 kann von erheblicher Bedeutung bezüglich der Erfassung des dynamischen Verhaltens des mechanischen Antriebssystems 10 sein. Diese spezielle Frage braucht jedoch hier im Hinblick auf die Erfindung nicht weiter vertieft zu werden, da die Erfindung in jedem Fall anwendbar ist.

Der Tachogenerator 11 liefert eine drehzahlabhängige und drehrichtungsabhängige Wechselspannung 20, die jedoch nicht zur Erfassung der Fahrzeugistgeschwindigkeit genutzt wird (ein daraus abgeleiteter Geschwindigkeitswert wäre wegen des Radschlüpfens nicht korrekt), sondern zur Erfassung des Drehbeschleunigungsistwertes. Die Wechselspannung 20 ist der Schleuderidentifikationseinrichtung 3 zugeführt.

Die Schleuderidentifikationseinrichtung 3 ist eine weiter unten genauer beschriebene Einrichtung zur Durchführung des erfindungsgemäßen Verfahrens zur Feststellung von Schleuder- oder Gleitzuständen. Sie liefert an einem ersten Ausgang 31 ein Schleuderintensitätssignal 21, das zur weiteren Verwertung der Schleuderschutzerfassung 5 zugeführt ist.

Bei modernen Lokomotiven sind mehrere sich ergänzende Einrichtungen zur Verhinderung von Schleuder- oder Gleitzuständen vorhanden. Dazu gehört z.B. eine Einrichtung in der Fahr/Bremssteuerung 2, die eine sprunghafte Änderung einer Zugkraftsollwertvorgabe 22 an einem zweiten Eingang 42 der Steuereinrichtung 1 verhindert. Die vorgegebene Zugkraft kann auch negativ sein und wird dann Bremskraft genannt. Wenn also von einem Lokomotivführer ein Fahrschalter plötzlich aus einer Nullstellung in eine Endstellung "Fahren" oder "Bremsen" oder gar von einer dieser Endstellungen in die andere gebracht wird, so ändert sich die Zugkraftsollwertvorgabe 22 nur mit einer Änderungsgeschwindigkeit, die durch einen Funktionsbildner in der Fahr/Bremssteuerung 2 bestimmt wird. Die Fahrbefehle des Lokomotivführers bzw. die Signale aus dem Fahrschalter werden über einen ersten Eingang 41 in die Fahr/Bremssteuerung 2 eingegeben.

Die vom zweiten Eingang 42 der Steuereinrichtung 1 ausgehende gestrichelte Leitung 12 soll andeuten, daß die Zugkraftsollwertvorgabe 22 in der Steuereinrichtung 1 noch weiter beeinflußt wird, z.B. zur Anpassung an eine bestimmte Zugbremsart oder ein bestimmtes Z/v-Diagramm, ehe sie einer Vergleichsstelle 13 zugeführt wird. An der Vergleichsstelle 13 wird ein Sollwertdifferenzsignal 23 gebildet, zwischen der Zugkraftsollwertvorgabe 22 und einem ersten Minderungssignal 24 aus der Schleuderschutzerfassung 5 sowie einem zweiten Minderungssignal 25 aus der Momentensollwertbeeinflussung 6.

Das erste Minderungssignal 24 wird von der Schleuderschutzerfassung 5 ausgegeben sobald eine Schleuder- bzw. Gleitsituation erkannt wird. Durch das erste Minderungssignal 24 wird die Zugkraftsollwertvorgabe 22 vorübergehend reduziert, damit sich ein schlüpfender Radsatz "fangen" kann. Das zweite Minderungssignal 25 stellt ein von der Momentensollwertbeeinflussung 6 berechnetes Korrektursignal dar, das aufgrund einer Beobachtung der Schleuderintensität und Schleuderhäufigkeit gebildet wird. Die Momentensollwertbeeinflussung 6 ist dazu mit der Schleuderschutzerfassung 5 verbunden.

Die Schleuderschutzerfassung 5 erhält ihre Informationen erstens aus dem von der Schleuderidentifikationseinrichtung 3 ausgegebenen Schleuderintensitätssignal 21 und zweitens aus einem Rückmeldesignal 26 einer Frequenzanstiegsbegrenzung 14, wenn sich die Läuferfrequenz $f_N$ des Motors 9 in unzulässiger Weise ändert.

Die Läuferfrequenz $f_N$ wird im Motor 9 gemessen und der Frequenzanstiegsbegrenzung 14 zugeführt. In Verbindung mit dem Beschleunigungsgrenzwertgeber 4 wird von der Frequenzanstiegsbegrenzung 14 ein von den jeweiligen Traktionsbedingungen abhängiges Korrektursignal $f_n$ ausgegeben.

Die Steuereinrichtung 1 gibt von einem Sollwertausgang 32 eine korrigierte Zugkraftsollwertvorgabe 27 aus, die in der Wechselrichterregelung 7 in eine Frequenz $f_2$ umgeformt wird. An einer Frequenzverknüpfungsstelle 15 wird die Frequenz $f_2$ mit dem Korrektursignal $f_n$ verknüpft, wodurch eine Ständerfrequenz $f_1$ gebildet wird, die dem Wechselrichter 8 zugeführt ist.

Die zur Durchführung des erfindungsgemäßen Verfahrens vorgesehene Einrichtung mit der Bezeichnung "Schleuderidentifikationseinrichtung 3" enthält einen Signalgenerator 50, einen Funktionsbildner 51, ein Filter 52, einen Korrelator 53 und einen Auswerter 54. Ein vom Signalgenerator 50 ausgegebenes Identifikationssignal I ist dem Funktionsbildner 51, dem Korrelator 53 und dem Auswerter 54 zugeführt. An einen zweiten Eingang des Funktionsbildners 51 liegt das Sollwertdifferenzsignal 23 an. Im Funktionsbildner 51 werden Identifikationssignal I und Sollwertdifferenzsignal 23 z.B. multiplikativ verknüpft, wodurch ein in seiner Amplitude vom Sollwertdifferenzsignal 23 abhängiges angepaßtes Identifikationssignal AIS gebildet wird, das an einer Additionsstelle 16 mit dem Sollwertdifferenzsignal 23 verknüpft wird, zur Bildung der korrigierten Zugkraftsollwertvorgabe 27 am Sollwertausgang 32.

Im Signalgenerator 50 wird als Identifikationssignal I ein nahezu rechteckförmiges Signal erzeugt. Dieses Identifikationssignal I hat eine Frequenz, die im Bereich einer Resonanzfrequenz des mechanischen Antriebs 10 gewählt wird, und liegt z.B. in einem Bereich von 2 bis 10 Hz. Die Flanken des Signals I sind rampenförmig gestaltet, um eine Uberbeanspruchung elektrischer und mechanischer Einrichtungen zu vermeiden.

Die Verknüpfung des Identifikationssignal I mit dem Sollwertdifferenzsignal 23 im Funktionsbildner 51 erfolgt mit einem Multiplikationsfaktor k, der etwa bei 2 bis 5% liegt.

Das Identifikationssignal I gelangt also über den Funktionsbildner 51 und die Additionsstelle 16 als der korrigierten Zugkraftsollwertvorgabe 27 aufmoduliertes Signal zur Wechselrichtersteuerung 7 und zum Wechselrichter 8 und ist schließlich dem Ständerstrom des Motors 9 überlagert. Auch das mechanische Antriebssystem 10 schwingt im Rhythmus des Identifikationssignals I, da ein vom im Ständerstrom enthaltenen Idenfikationssignal I erzeugtes Wechselmoment $M_W$ einem Betriebsmoment $M_B$ überlagert ist. Dadurch ist das Identifikationssignal I auch der vom Tachogenerator 11 abgegebenen Wechselspannung 20 überlagert, die einmal direkt dem Auswerter 54 und einmal über das Filter 52, z.B. ein Hochpaß, als Meßsignal S dem Auswerter 54 und dem Korrelator 53 zugeführt wird. Die Wechselspannung 20 wird im Filter 52 gefiltert, weil zur Identifikation des Schleuderzustandes der Gleichanteil der Beschleunigung nicht benötigt wird. Es kommt nur auf die Änderung einer aus der Wechselspannung 20 entnehmbaren Drehbeschleunigung B an.

Im Korrelator 53 wird eine Korrelationsrechnung, z.B. eine Polaritätskorrelation (Zweipunktkorrelation) durchgeführt und das Ergebnis wird im Auswerter 54 bezüglich Amplitude und Phase ausgewertet. Dabei können z.B. folgende Fahrsituationen unterschieden werden:

a) Fahren unterhalb der Schleudergrenze: In diesem Fall kann das Rad als starr mit der Schiene verbunden betrachtet werden. Das Identifikationssignal I bewirkt lediglich eine Eigenschwingung des mechanischen Antriebssystems 10, die sich auch auf das Meßsignal S überträgt. Das Meßsignal S und das Identifikationssignal I sind miteinander korreliert. Die Phasenverschiebung bleibt unterhalb eines definierten Grenzwertes.

b) Fahren an der Schleudergrenze: Wird die Schleudergrenze erreicht, so reagiert das Rad R auf die Anregung durch das Identifikationssignal I. Aufgrund der nun zusätzlich wirksam werdenden Radmasse wird die Phasenverschiebung zwischen dem Identifikationssignal I und dem Meßsignal S größer. Außerdem kann eine Änderung der Schwingungsamplitude des Meßsignals S auftreten. Der Kraftschluß zwischen Schiene und Rad R ändert sich in zufälligen Abständen, woraus sich eine zusätzliche Anregung auf das mechanische Antriebssystem 10 ergibt und damit die Korrelation zwischen Meßsignal S und Identifikationssignal I kleiner wird.

c) Schleudern: Im Schleuderfall ist der Mittelwert des Motormomentes größer als das auf die Schiene übertragbare Moment. Es kommt zu einem "Durchdrehen" des Rades R. Dabei verschwindet die Korrelation zwischen Meßsignal S und Identifikationssignal I hinsichtlich Amplitude und Phase. Die Phasenverschiebung zwischen den Signalen wird etwa 180°.

Im Auswerter 54 wird aufgrund einer Auswertung des Ergebnisses der Korrelationsrechnung, wobei das Identifikationssignal I, das Meßsignal S und die Wechselspannung 20 als Bezugswerte herangezogen werden, das Schleuderintensitätssignal 21 gebildet. Das der Schleuderschutzerfassung 5 zugeführte Schleuderintensitätssignal 21 kann z.B. ein quasianaloges Signal sein. Damit ist eine feinfühlige Reaktion auf unterschiedliche Schleudersituationen, z.B. auch ein Fahren an der Schleudergrenze möglich.

Je nach Anwendungsfall kann es auch zweckmäßig sein, statt eines Schleuderidentifikationssignals 21, das von der Schleuderschutzerfassung 5 weiterverarbeitet wird, am Auswerter 54 direkt konkrete Meldungen abzugeben, die z.B. bedeuten "Gleiten", "Schleudern", "Schleudergrenze erreicht" und "kein Schlüpfen".

Da das Identifikationssignal I auch dem Fahrstrom überlagert ist, könnten sich Rückwirkungen auf das Stromversorgungsnetz ergeben. Zur Verringerung eines solchen Einflusses auf das elektrische Netz wird für Lokomotiven mit mehreren Fahrmotoren vorgeschlagen, das Signal I asynchron auf die einzelnen Antriebe aufzuschalten, z.B. gegenphasig auf zwei Drehgestelle.

Die Erfindung ist sowohl für Antriebe geeignet, bei denen z.B. zwei Motoren - z.B. zum Antrieb zweier Achsen in einem Drehgestell - elektrisch gekoppelt sind, z.B. parallelgeschaltet sind, als auch für Antriebe, bei denen einzelne Achsen einzeln gesteuert werden.

**Patentansprüche**

1. Verfahren zur Feststellung von Schleuder- und/oder Gleitzuständen bei mit mindestens einem Elektromotor (9) angetriebenen Fahrzeugen, dadurch gekennzeichnet, daß
   - mit Hilfe eines elektrischen Identifikationssignals (I) ein einem Betriebsdrehmoment ($M_B$) überlagertes Wechselmoment ($M_W$) an einer Motorwelle (W) erzeugt wird,
   - die Reaktion eines mechanischen Antriebssystems (10), das die mechanischen Einrichtungen von der Motorwelle (W) bis zu einem Antriebsrad (R) umfaßt, auf das Wechselmoment ($M_W$) erfaßt wird und
   - durch Vergleich dieser Reaktion mit dem Identifikationssignal (I) ein Ausgangssignal (21) gebildet wird, das eine Information über Schleuder- und/oder Gleitzustände enthält.

2. Verfahren nach Anspruch 1, dadurch gekennzeichnet, daß es sich bei dem Fahrzeug um eine Lokomotive handelt.

3. Verfahren nach einem der vorstehenden Ansprüche, dadurch gekennzeichnet, daß es sich bei dem Elektromotor (9) um einen Drehstromasynchronmotor handelt.

4. Verfahren nach einem der vorstehenden Ansprüche, dadurch gekennzeichnet, daß der Elektromotor (9) über einen Wechselrichter (8) gespeist wird und daß das Identifikationssignal einem Drehmomentsollwert (23) überlagert wird, der einer Wechselrichterregelung (7) für den Wechselrichter (8) als Eingangsgröße (27) zugeführt wird.

5. Verfahren nach einem der vorstehenden Ansprüche, dadurch gekennzeichnet, daß als Identifikationssignal (I) ein nahezu rechteckförmiges Wechselspannungssignal verwendet wird.

6. Verfahren nach einem der vorstehenden Ansprüche, dadurch gekennzeichnet, daß als Identifikationssignal (I) ein Wechselspannungssignal mit rampenförmigen Flanken verwendet wird.

7. Verfahren nach einem der Ansprüche 1 bis 4, dadurch gekennzeichnet, daß als Identifikationssignal (I) ein sinusförmiges Wechselspannungssignal verwendet wird.

8. Verfahren nach einem der vorstehenden Ansprüche, dadurch gekennzeichnet, daß die Frequenz des Identifikationssignal (I) im Bereich einer Eigenfrequenz des mechanischen Antriebssystems (10) liegt, z.B. im Bereich von 2 bis 10Hz.

9. Verfahren nach einem der vorstehenden Ansprüche, dadurch gekennzeichnet, daß mehrere Antriebe (Motor mit Wechselrichter) vorgesehen sind und das Identifikationssignal (I) auf die Antriebe asynchron, im Falle von zwei Antrieben vorzugsweise gegenphasig, aufgeschaltet wird.

10. Verfahren nach einem der vorstehenden Ansprüche, dadurch gekennzeichnet, daß zur Erfassung der Reaktion des mechanischen Systems (10) die Drehbeschleunigung (B) an der Motorwelle (W) gemessen wird.

11. Verfahren nach einem der Ansprüche 1 bis 9, dadurch gekennzeichnet, daß zur Erfassung der Reaktion des mechanischen Systems (10) die Drehbeschleunigung (B) am angetriebenen Rad (R) gemessen wird.

12. Verfahren nach einem der vorstehenden Ansprüche, dadurch gekennzeichnet, daß zur Durchführung des Vergleichs der Reaktion des mechanischen Systems (10) mit dem Identifikationssignal (I) durch Filterung der gemessenen Drehbeschleunigung (B) ein Meßsignal (S) gebildet wird, das keine Gleichanteile enthält und mit Hilfe einer Korrelationsrechnung die Korrelation zwischen dem Meßsignal (S) und dem Identifikationssignal (I) ermittelt wird.

13. Verfahren nach Anspruch 12, dadurch gekennzeichnet, daß zur Bildung des Ausgangssignals (21), das eine Information über Schleuder- und/oder Gleitzustände enthält, eine Auswertung des Ergebnisses der Korrelationsrechnung hinsichtlich Amplitude und Phase unter Berücksichtigung der gemessenen Drehbeschleunigung (B) des Meßsignals (S) und des Identifikationssignals (I) erfolgt.

14. Verfahren nach einem der vorstehenden Ansprüche, dadurch gekennzeichnet, daß das Ausgangssignal (21) einen quasianalogen Wert darstellt, der in nachgeschalteten Einrichtungen weiter ausgewertet werden kann.

15. Verfahren nach einem der Ansprüche 1 bis 13, dadurch gekennzeichnet, daß das Ausgangssignal (21) eindeutige Zustände, wie z.B. Gleiten, Schleudergrenze erreicht, Schleudern, kein Schleudern oder Gleiten meldet.

## Claims

1. Method for determining swerving and/or skidding states in vehicles driven with at least one electric motor (9), characterised in that
   - an alternating torque ($M_W$) which is superimposed on an operating torque ($M_B$) is generated on a motor shaft (W) with the aid of an electric identification signal (I),
   - the reaction of a mechanical drive system (10) which comprises the mechanical devices from the motor shaft (W) to a drive wheel (R) on the alternating torque ($M_W$) is detected and
   - by comparing this reaction with the identification signal (I) an output signal (21) is formed which contains information relating to the swerving and/or skidding states.

2. Method according to Claim 1, characterised in that the vehicle is a locomotive.

3. Method according to one of the preceding claims, characterised in that the electric motor (9) is an asynchronous rotary current motor.

4. Method according to one of the preceding claims, characterised in that the electric motor (9) is fed via a current inverter (8) and in that the identification signal is superimposed on a set torque value (23) which is fed to a current inverter control (7) for the current inverter (8) as input variable (27).

5. Method according to one of the preceding claims, characterised in that a virtually square-wave alternating voltage signal is used as identification signal (I).

6. Method according to one of the preceding claims, characterised in that an alternating voltage signal with ramp-shaped edges is used as identification signal (I).

7. Method according to one of Claims 1 to 4, characterised in that a sinusoidal alternating voltage signal is used as identification signal (I).

8. Method according to one of the preceding claims, characterised in that the frequency of the identification signal (I) lies in the region of a natural frequency of the mechanical drive system (10), for example in the region of 2 to 10 Hz.

9. Method according to one of the preceding claims, characterised in that a plurality of drives (motor with current inverter) are provided and the identification signal (I) is connected to the drives asynchronously and preferably in antiphase in the case of two drives.

10. Method according to one of the preceding claims, characterised in that the angular acceleration (B) on the motor shaft (W) is measured in order to detect the reaction of the mechanical system (10).

11. Method according to one of Claims 1 to 9, characterised in that the angular acceleration (B) at the driven wheel (R) is measured in order to detect the reaction of the mechanical system (10).

12. Method according to one of the preceding claims, characterised in that, in order to carry out the comparison of the reaction of the mechanical system (10) with the identification signal (I) by filtering the measured angular acceleration (B), a measurement signal (S) is formed which contains no equivalent portions, and the correlation between the measurement signal (S) and the identification signal (I) is determined with the aid of a correlation calculation.

13. Method according to Claim 12, characterised in that, in order to form the output signal (21) which contains information relating to the swerving and/or skidding states, an evaluation of the result of the correlation calculation takes place with respect to amplitude and phase taking into account the measured angular acceleration (B) of the measurement signal (S) and of the identification signal (I).

14. Method according to one of the preceding claims, characterised in that the output signal (21) constitutes a quasi-analog value which can be further evaluated in devices connected downstream.

15. Method according to one of Claims 1 to 13, characterised in that the output signal (21) reports unambiguous states such as for example skidding, the reaching of the swerving limit, swerving, the absence of swerving or skidding.

## Revendications

1. Procédé de détermination de conditions de patinage et/ou de glissement sur des véhicules mus par au moins un moteur électrique (9), caractérisé par le fait
   - qu'on produit à l'aide d'un signal d'identification (I) électrique un moment alterné ($M_W$) qui est superposé à un couple de fonctionnement ($M_B$) sur un arbre de moteur (W),
   - on enregistre la réaction au moment alterné ($M_W$) d'un système moteur (10) mécanique qui englobe les éléments mécaniques de l'arbre du moteur (W) à la roue motrice (R) et,
   - par comparaison de cette réaction avec le signal d'identification (I), on forme un signal de sortie qui contient une information sur des conditions de patinage et/ou de glissement.

2. Procédé selon la revendication 1, caractérisé par le fait que le véhicule est une locomotive.

3. Procédé selon l'une des revendications précédentes, caractérisé par le fait que le moteur électrique (9) est un moteur asynchrone triphasé.

4. Procédé selon l'une des revendications précédentes, caractérisé par le fait que le moteur électrique (9) est alimenté par l'intermédiaire d'un convertisseur continu-alternatif (8) et par le fait que l'on superpose le signal d'identification à un couple de consigne (23) qui est envoyé en tant que donnée d'entrée (27) à un dispositif de régulation (7) du convertisseur continu-alternatif (8).

5. Procédé selon l'une des revendications précédentes, caractérisé par le fait que l'on utilise comme signal d'identification (I) un signal de tension alternative sensiblement carré.

6. Procédé selon l'une des revendications précédentes, caractérisé par le fait que l'on utilise comme signal d'identification (I) un signal de tension alternative à flancs inclinés.

7. Procédé selon l'une des revendications 1 à 4, caractérisé par le fait que l'on utilise comme signal d'identification (I) un signal de tension alternative sinusoïdal.

8. Procédé selon l'une des revendications précédentes, caractérisé par le fait que la fréquence du signal d'identification (I) est située dans la zone d'une fréquence propre du système moteur (10) mécanique, par exemple dans la plage de 2 à 10 Hz.

9. Procédé selon l'une des revendications précédentes, caractérisé par le fait qu'il est prévu plusieurs systèmes moteurs (moteur avec convertisseur continu-alternatif) et que le signal d'identification (I) est envoyé de manière asynchrone aux systèmes moteurs, de préférence en opposition de phase dans le cas de deux systèmes moteurs.

10. Procédé selon l'une des revendications précédentes, caractérisé par le fait que, pour enregistrer la réaction du système mécanique (10), on mesure l'accélération angulaire (B) au niveau de l'arbre moteur (W).

11. Procédé selon l'une des revendications 1 à 9, caractérisé par le fait que, pour enregistrer la réaction du système mécanique (10), on mesure l'accélération angulaire (B) au niveau de la roue entraînée (R).

12. Procédé selon l'une des revendications précédentes, caractérisé par le fait que, pour effectuer la comparaison entre la réaction du système mécanique (10) et le signal d'identification (I), on forme un signal de mesure (S) par filtrage de l'accélération angulaire (B) mesurée, lequel signal ne comporte pas de fractions égales et on détermine par un calcul de corrélation la corrélation entre le signal de mesure (S) et le signal d'identification (I).

13. Procédé selon la revendication 12, caractérisé par le fait que, pour former le signal de sortie (21) qui contient une information sur des conditions de patinage et/ou de glissement, on exploite le résultat du calcul de corrélation du point de vue de l'amplitude et de la phase en tenant compte de l'accélération angulaire (B) mesurée du signal de mesure (S) et du signal d'identification (I).

14. Procédé selon l'une des revendications précédentes, caractérisé par le fait que le signal de sortie (21) est une grandeur quasi-analogique qui peut être exploitée dans des dispositifs montés en aval.

15. Procédé selon l'une des revendications 1 à 13, caractérisé par le fait que le signal de sortie (21) signale des conditions nettes telles que glissement, limite de patinage atteinte, patinage, pas de patinage ou de glissement.